# EUROPEAN PATENT APPLICATION

(11) **EP 3 330 112 A1**
(43) Date of publication of application: **06.06.2018**
(21) Application number: 16201947.5
(22) Date of filing: 02.12.2016
(51) Int. Cl.: B60G 21/055, B60G 7/00

(54) **STABILIZER FOR A VEHICLE SUSPENSION**

(71) Applicant: Engineering Developments for Automotive Industry, S.L., 48430 Amorebieta-Etxano (Bizkaia) (ES); Toyota Motor Europe, 1140 Brussels (BE)
(72) Inventor: Mosteiro Goyoaga, Jose Ramon, 48340 Amorebieta (ES); Marchand, Nicolas, 1160 brussels (BE)
(74) Representative: Herrero & Asociados, S.L.

(57) **Abstract**

The present invention relates to a stabilizer for a vehicle suspension, comprising a longitudinal polymeric body with a metal frame having two ends (3) and a central sector (2), having a hole (4) at each end (3) in which there is housed a ball joint (7), wherein the frame is formed from two metal parts (1) having an open section which are arranged opposite one another on their open sides, wherein each part (1) comprises a deep drawn portion (8) that goes towards the open side such that the opposing parts (1) are supported on said deep drawn portions (8) and attached therein by welding.

## Description

### Technical Field of the Invention

The present invention relates to a stabilizer for a vehicle suspension that can be applied in the area of the component industry for the automotive vehicle industry.

### Background of the Invention

Suspension systems for automotive vehicles comprise stabilizers that are arranged between the vehicle chassis and the suspension of each wheel. These stabilizers are usually formed by a cylindrical element which incorporates housings at its ends for assembling joints, typically ball or elastic joints.

The stabilizer is a part which joins the stabilizer bar with the suspension of the wheel. Stabilizers belong to the kinematic chain usually formed by the stabilizer bar, stabilizer, suspension, and chassis of the vehicle. The stabilizer is the element responsible for transmitting the stresses generated by the stabilizer bar to the suspension of the wheel, and vice versa, generating a moment in the vehicle chassis that is contrary to the vehicle's roll moment, achieving greater lateral rigidity of the vehicle.

When a vehicle starts going around a curve, a centrifugal force causing the car body to tilt towards the outside of said curve, is generated, creating a roll moment. The stabilizer bar attached to the suspension of the wheel by means of the stabilizer in turn experiences torsion causing a moment that is contrary to the vehicle's roll moment.

As explained above, the function of the stabilizer is to transmit the stresses generated by the stabilizer bar to the suspension of the wheel, and vice versa. This element consists of two joints attached by means of a longitudinal body. The joints can be ball joints or elastic joints. One of the joints is in turn attached to the stabilizer or torsion bar and the other joint is attached to the vehicle's shock absorber, also being able to be anchored to any other element of the suspension instead of to the shock absorber, for example to a suspension arm.

The stabilizer is made up of a usually metal or polymeric body with two kinematic centers at its ends which are the center of rotation of the joints located at said ends. These joints can be either ball or elastic joints.

If they are ball joints, an intermediate part is arranged between the ball joint and the body referred to as a seat, the function of which is to assure the positioning of the ball joint in the kinematic center, allow transferring stresses from the ball joint to the body and allow the rotation of the ball joint with respect to the body. The seat is integrally attached to the body, so there is relative movement between the ball joint and the remaining components described up until now.

The ball joint has the function of generating three rotational degrees of freedom and attaching the assembly of the stabilizer to the stabilizer bar or to the shock absorber of the automotive vehicle. In addition to these two functions, there is a third function which is assuring the leak-tightness inside the joint. This latter function also exists in the body of the stabilizer, because it is in these two components where the dust seal or bellows is anchored by means of the rings.

In the case of contemplating an elastic joint with 6 degrees of freedom, the joint is integrally attached to the body of the stabilizer at one end and at the other end to the stabilizer bar or to the shock absorber of the automotive vehicle.

There are different types of stabilizers on the market which have different configurations according to each specific application. These elements usually have a series of requirements in common among them, including, in particular, having a specific rigidity, weighing as little as possible, allowing the fastest assembly possible and costing as little as possible.

There are steel stabilizers characterized by being very heavy and having poor corrosion resistance, coating the body being necessary. An advantage of such stabilizers is their high rigidity.

There are also aluminum stabilizers characterized by weighing less than those mentioned above but having less rigidity.

Finally, there are plastic stabilizers which are characterized by weighing less and being more economical; however these plastic stabilizers require a larger volume to attain a rigidity equivalent to those mentioned above.

Various methods are used today for obtaining these stabilizers, said methods are determined by the type of stabilizer, its materials and design requirements. In this sense, the attachment of the main parts forming the body of the stabilizer to one another is an essential aspect which determines both the production costs and the strength of the stabilizer obtained, this being an aspect which can be optimized both in current stabilizers and in processes used for obtaining them.

### Description of the Invention

The present invention relates to a stabilizer defined in claim 1.

The stabilizer of the invention is a longitudinal element with two ball joints at the ends. This element has two kinematic points at its ends which are the centers of joint. The line joining the two kinematic centers is called "longitudinal axis". It should be known that the longitudinal axis coincides with the main axis of inertia in the intermediate sections of the body to thereby homogenously distribute the traction-compression loads throughout the entire section.

The present invention focuses on improving and optimizing the attachment of the parts forming the body of the stabilizer which allows lowering the production costs while at the same time maintaining the mechanical performances of the stabilizer as described in more detail above once the invention has been explained.

The stabilizer proposed by the invention comprises a longitudinal polymeric body with a metal frame having two ends and a central sector, having a hole at each end in which there is housed a ball joint. The frame is formed from two metal parts having an open section which are arranged opposite one another on their open sides.

According to the invention, each part comprises at least one deep drawn portion that goes towards the open side such that the opposing parts are supported on said deep drawn portions and attached therein by welding.

For example with respect to other means for attachment of parts forming the central body, such as with respect to attachment by means of rivets, for example, the invention has the advantages of reducing the number of parts, preventing the risk of losing a rivet with the subsequent risk of the stabilizer breaking that this entails. Furthermore, the weight of the entire stabilizer is reduced as there are less parts, while at the same time maintaining the mechanical properties of the attachment which are even increased.

Other secondary aspects of the invention are defined in the dependent claims.

The possibility that the central sector of each part comprises two tabs located in opposition on each side and facing the open side is contemplated. In such case, the ends comprise rims such that the two opposing parts are supported on the tabs and on the rims, in addition to on the deep drawn portions.

It is also contemplated that the welded parts are embedded in an overmolded body which externally coats them and fills the inner space defined by the two opposing metal parts.

According to this embodiment, there is a need to point out a fundamental advantage of the invention, i.e., the fact that the weld does not project out of the contour of the parts, like in the case of rivets, which makes the overmolding operation easier and increases stabilizer durability since there are no unwanted chafing in said areas as a result of projecting rivets.

A second aspect of the invention relates to a method for obtaining a stabilizer bar for a vehicle suspension such as the one described above.

According to the invention, the method comprises the following phases or steps:
- obtaining two metal parts by means of mechanical press forming, each part having two ends and a central sector comprising at least one deep drawn portion, each end having a hole,
- arranging said parts opposite one another,
- welding both parts in the opposing deep drawn portions, and
- embedding the parts in an overmolded body which externally coats them and fills the inner space defined by the two opposing parts.

### Description of the Drawings

To complement the description that is being made and for the purpose of aiding to better understand the features of the invention according to a preferred practical embodiment thereof, a set of drawings is attached as an integral part of said description in which the following has been depicted with an illustrative and non-limiting character:
Figure 1 shows a perspective view and a longitudinal section of a preferred embodiment of the part forming the body of the stabilizer of the invention.
Figure 2 shows an exploded perspective view of an initial step in the process for obtaining the stabilizer, consisting of arranging the parts opposite one another, as depicted in Figure 1.
Figure 3 shows a perspective view and a detail of the step following the step depicted in Figure 3 in which both opposing parts are attached by means of welding.

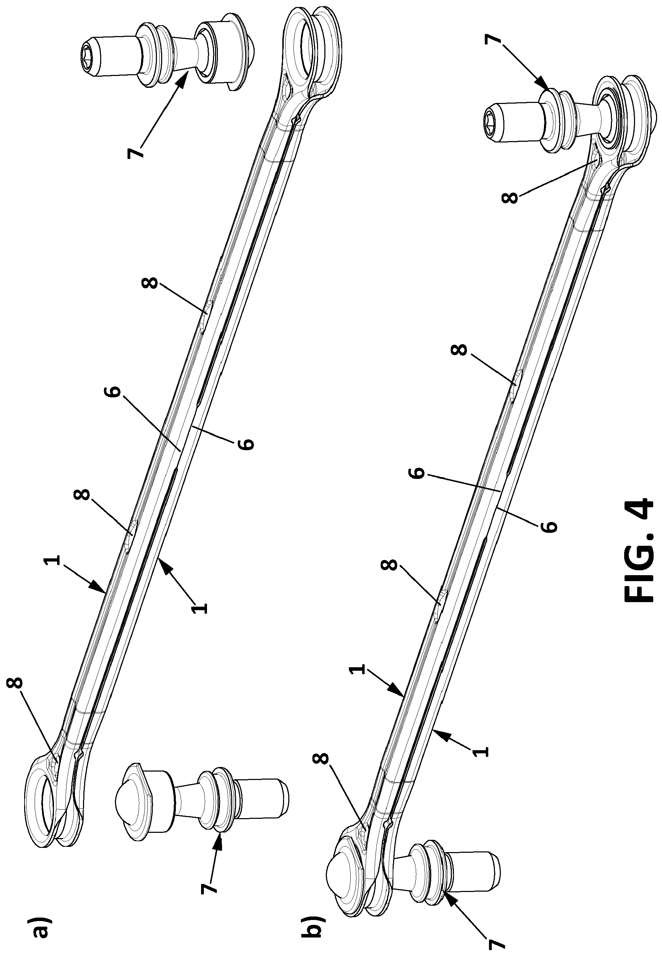

Figure 4 shows two views sequentially depicting two phases of a process step following the one depicted in Figure 3 whereby the joints, Figure 4a), and the seats, Figure 4b), are placed in position.
Figure 5 shows two views sequentially depicting the phases of a process step following the one depicted in Figure 4 in which the body is overmolded.
Figure 6 shows a perspective view of an embodiment of the seat.
Figure 7 shows two views sequentially depicting two phases of a process step following the one depicted in Figure 3 whereby the joints, Figure 7a), and the seats of figure 6, Figure 7b), are placed in position.

### Preferred Embodiment of the Invention

In view of the described drawings, it can be seen how in one of the possible embodiments of the invention the stabilizer for a vehicle suspension proposed by the invention comprises a longitudinal polymeric body with a metal frame having two ends (3) and a central sector (2).

Each end (3) comprises a hole (4) in which there is housed a ball joint (7). The frame is in turn formed from two metal parts (1) having an open section which are arranged opposite one another on their open sides.

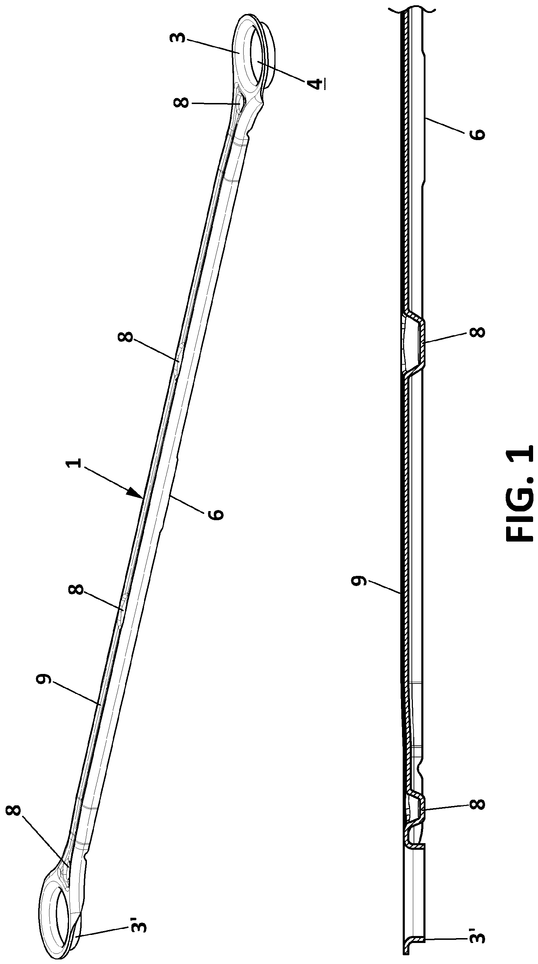

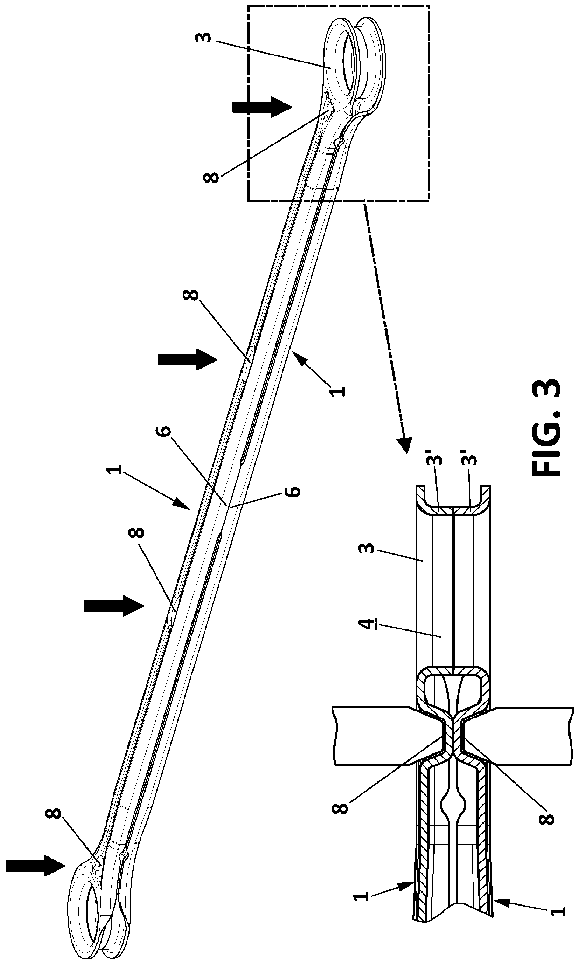

As can be seen in the preferred embodiment shown in Figures 1 and 3, each part (1) comprises four deep drawn portions (8) distributed along the central sector (2), where each deep drawn portion (8) goes towards the open side. The two opposing parts (1) are therefore supported on said deep drawn portions (8) and attached therein by welding.

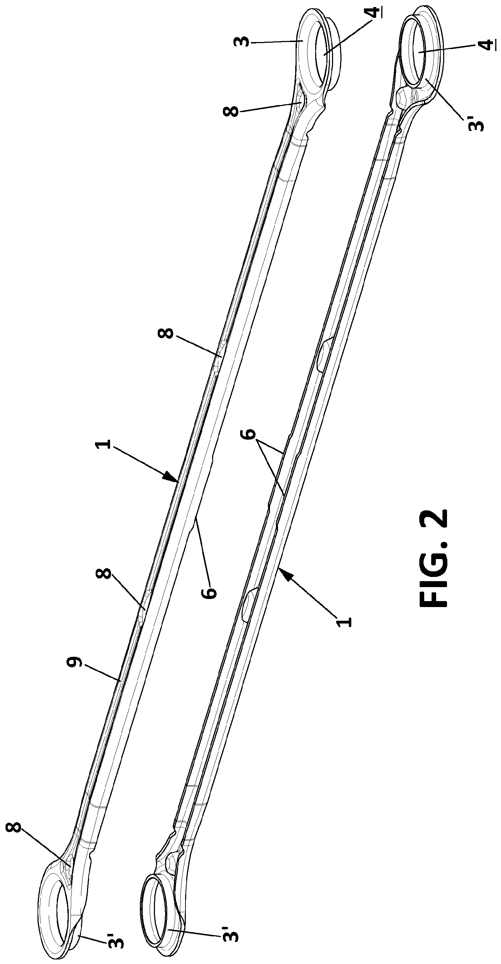

In turn, the central sector (2) of each part (1) comprises two tabs (6) located in opposition on each side and facing the open side. The ends (3) in turn comprise rims (3'). In this sense, in an instant after the one depicted in Figure 2 and before the welding depicted in Figure 3, the two opposing parts (1) are supported on the deep drawn portions (8) as well as on the tabs (6) and rims (3').

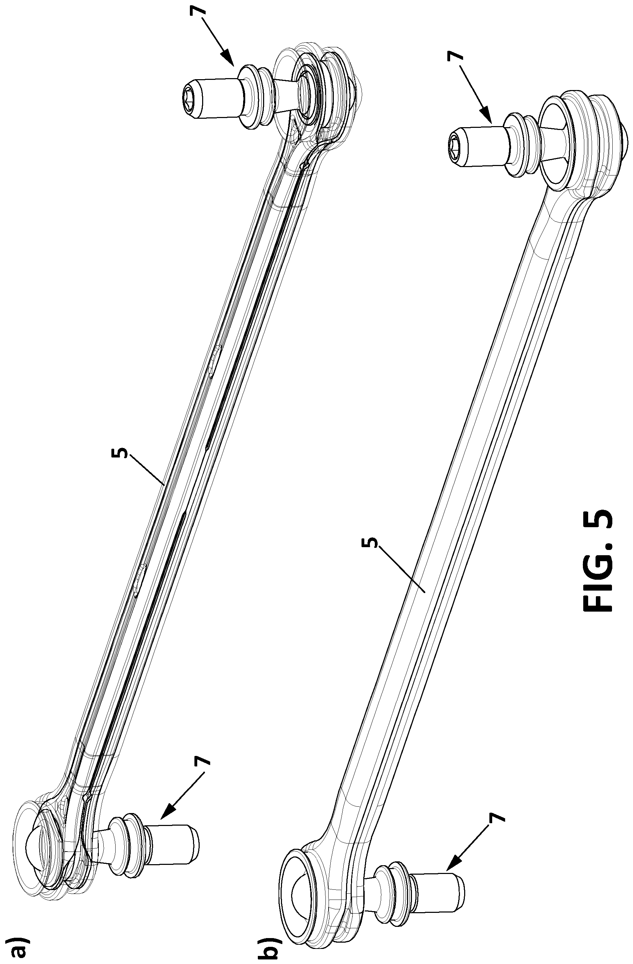

As depicted in Figure 5, according to a preferred embodiment of the invention the welded parts (1) are embedded in an overmolded body (5) which externally coats them and fills the inner space defined by the two opposing metal parts (1).

According to a preferred embodiment, the parts (1) are spot welded in the deep drawn portions (8).

It is also contemplated that the central sector (2) of each part (1) comprises a continuous longitudinal deep drawn portion (9) which confers greater rigidity and improves mechanical performance of the entire stabilizer as a whole.

As can be seen in the preferred embodiment depicted in the drawings, the central sector (2) of the parts (1) is slender and the holes (4) of the ends have a circular configuration, being concentric to the outer contour of the ends (3) which is also mostly circular.

In this sense, the axes of the two holes (4) of the ends (3) are positioned perpendicular to the longitudinal axis of the straight sector (2) of each part (1).

Therefore, in the embodiment being described each part (1) is symmetrical with respect to the longitudinal axis and has a substantially planar configuration, being able to be obtained by means of press forming.

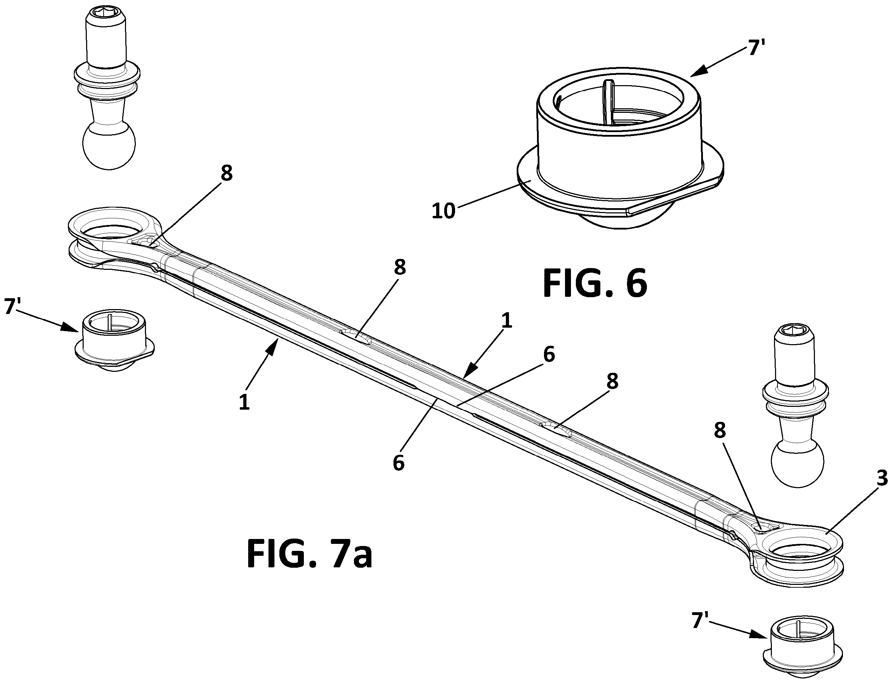

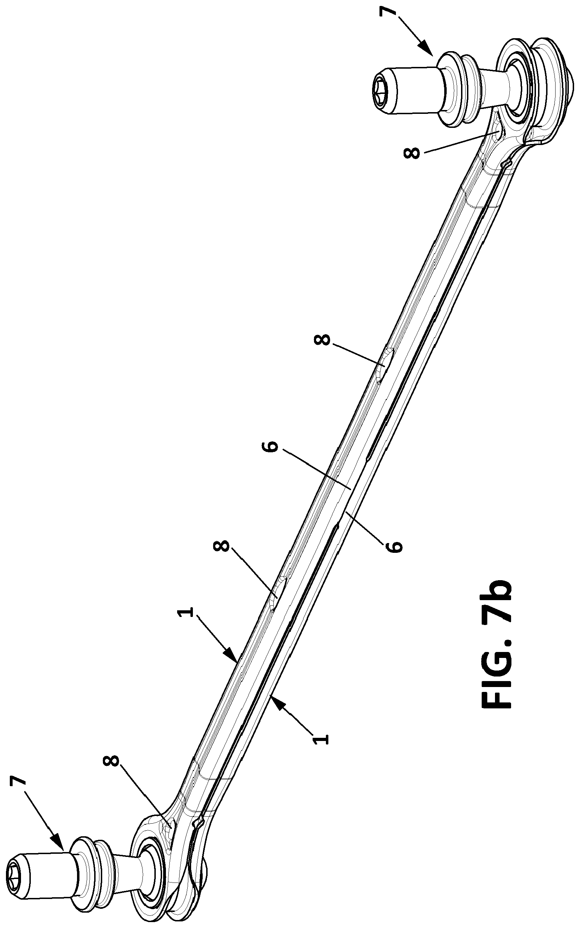

Figure 6 shows an embodiment of the seat (7'), which comprises a perimeter wing (10). The seat (7') is intended to be placed in position within the hole (4) by the opposite side to that of the ball joint, as represented in figure 7a), thus the wing (10) acts as a stop. Furthermore, the seat (7') comprises a recess in the wing (10) which permits to orientate the seat (7') with respect the parts (1), in order to locate the lubrication channels of the stabilizer.

## Claims

1. Stabilizer for a vehicle suspension, comprising a longitudinal polymeric body with a metal frame having two ends (3) and a central sector (2), having a hole (4) at each end (3) in which there is housed a ball joint (7), wherein the frame is formed from two metal parts (1) having an open section which are arranged opposite one another on their open sides, **characterized in that** each part (1) comprises at least one deep drawn portion (8) that goes towards the open side such that the opposing parts (1) are supported on said deep drawn portions (8) and attached therein by welding.

2. Stabilizer according to claim 1, wherein the central sector (2) of each part (1) comprises two tabs (6) located in opposition on each side and facing the open side, and the ends (3) comprising rims (3') such that the two opposing parts (1) are supported on the tabs (6) and on the rims (3'), in addition to on the deep drawn portion (8).

3. Stabilizer according to any of the preceding claims, wherein the welded parts (1) are embedded in an overmolded body (5) which externally coats them and fills the inner space defined by the two opposing metal parts (1).

4. Stabilizer according to any of the preceding claims, wherein each part (1) comprises four deep drawn portions (8) distributed along the length of the central sector (2).

5. Stabilizer according to any of the preceding claims, wherein the parts (1) are spot welded in the deep drawn portions (8).

6. Stabilizer according to any of the preceding claims, wherein the central sector (2) of each part (1) comprises a continuous longitudinal deep drawn portion (9).

7. Stabilizer according to any of the preceding claims, wherein the central sector (2) of the parts (1) is slender and the holes (4) of the ends have a circular configuration, being concentric to the outer contour of the ends (3) which is also mostly circular.

8. Stabilizer according to claim 7, wherein the axes of the two holes (4) of the ends (3) are positioned perpendicular to the longitudinal axis of the straight sector (2) of each part (1).

9. Stabilizer according to claim 8, wherein each part (1) is symmetrical with respect to the longitudinal axis.

10. Stabilizer according to any of the preceding claims, wherein the parts (1) have a substantially planar configuration and can be obtained by means of press forming.

11. Stabilizer according to any of the preceding claims, further comprising at least one seat (7') which comprises a perimeter wing (10), wherein the seat (7') is placed in position within the hole (4) by the opposite side to that of the ball joint, the wing (10) acting as a stop.

12. Stabilizer according to claim 11, wherein said at least one seat (7') comprises a recess in the wing (10) which permits to orientate the seat (7') with respect the parts (1).

13. Method for obtaining a stabilizer bar for a vehicle suspension, **characterized in that** it comprises:
- obtaining two metal parts (1) by means of mechanical press forming, each part having two ends (3) and a central sector (2) comprising at least one deep drawn portion (8), each end (3) having a hole (4),
- arranging said parts (1) opposite one another,
- welding both parts (1) in the opposing deep drawn portions (8), and
- embedding the parts (1) in an overmolded body (5) which externally coats them and fills the inner space defined by the two opposing parts (1).
